# EUROPEAN PATENT APPLICATION

(11) **EP 4 512 706 A1**
(43) Date of publication of application: **26.02.2025**
(21) Application number: 23192876.3
(22) Date of filing: 23.08.2023
(51) Int. Cl.: B62J 1/16, B62J 7/06, B62J 9/21

(54) **COUPLING ARRANGEMENT FOR DETACHABLE MOUNTING A LOAD CARRIER ON A BIKE**

(71) Applicant: Thule Sweden AB, 335 04 Hillerstorp (SE)
(72) Inventor: HENNINGSSON, Johan, Malmbäck (SE); BJURKA, Emelie, Bolmsö (SE)
(74) Representative: Wallentin, Lars

(57) **Abstract**

Disclosed is a coupling arrangement for mounting a load carrier, for example a child seat, on a steering tube portion extending upwardly from a headset of a bike, for example a steerer tube section or a stem shaft section. The coupling arrangement comprises a coupling portion for detachably coupling the load carrier to the coupling arrangement. The coupling arrangement further comprises a fixation portion for detachably fixing the coupling arrangement on the steering tube portion. The fixation portion defines an accommodating opening for the steering tube portion. The coupling arrangement is supportable on different steering tube portions of different steerer types including a steerer tube section of a threadless stem type steering system and a stem shaft section of a quill stem type steering system.

## Description

### FIELD

The present disclosure relates to a coupling arrangement and method for coupling a load carrier to a bike, for example a load carrier like child seat or a carrying basket.

### BACKGROUND

Front mounted load carriers that attach to the steering system of a bike are known in the art. For mounting the load carriers, it is known to attach mounting interfaces on the steering system. However, since there are steering systems with different stem types the mounting interfaces need to be specifically configured to fit to the stem type used on the bike. This resulted in mounting interfaces for the respective stem type so that a user needs to determine the type of steering system the bike on which the load carrier shall be mounted has and to buy the correct mounting interface that fits to the steering type. Furthermore, attaching the mounting interfaces can be cumbersome.

### SUMMARY

It is an object to provide an improved and cost-efficient solution for mounting front mounted load carriers on bikes.

The object is solved by the coupling arrangements and methods for mounting the coupling arrangements as presented in the claims, examples, and embodiments as described herein.

Disclosed is a coupling arrangement for mounting a load carrier on a steering tube portion extending upwardly from a headset of a bike. The load carrier may be a child seat. Accordingly, the coupling arrangement may be suitable for mounting a child seat on the steering tube portion. The steering tube portion may be a steerer tube section or a stem shaft section.

The coupling arrangement comprises a coupling portion for detachably coupling the load carrier to the coupling arrangement. The coupling portion may also be referred to as coupling interface for mounting the load carrier. The coupling portion may form one of two coupling partners used for establishing a connection between the load carrier and the coupling arrangement. In general, a possible connection between the load carrier and the coupling arrangement may be provided by means of a plug and socket type connection in which one of the connecting partners is received by the other connecting partner. The coupling portion may comprise a protrusion which is receivable in an opening or recess formed in the load carrier, for example in a lower front portion of the child seat. On the other hand, it is also possible to provide a protrusion, such as a rod, on the load carrier or child seat and the coupling portion may comprise one or more openings for receiving the protrusion on the load carrier or child seat. The connection may be provided such that the connection between the load carrier and the coupling arrangement may be locked once the coupling partners are connected to each other. A locking arrangement may be provided which automatically establishes such a locking as soon as the coupling partners are coupled to each other. An operating member may be provided for releasing such a locking. The operating member may be provided in a lower portion of the load carrier, for example in the base portion of the child seat. The operating member may comprise a gripping portion which is configured to be pulled for releasing the locking between the connecting members.

The steering tube portion is a portion protruding from the head tube of a bike frame. The steering tube portion is a tube portion provided in a force transfer path between the fork and a steering handle of a bike. Depending on the type of headset used in the bike, the steering tube portion may be a steerer tube section or a stem shaft section. The steerer tube section is a portion of a fork steerer tube extending through the head tube of the bike frame and protruding from an upper side of the head tube. The stem shaft section is a portion of the shaft inserted into the fork steerer tube and protruding from the fork steerer tube and the head tube in upward direction. The steerer tube section is available on a threadless headset arrangement also referred to as Aheadset or threadless stem type steering system. The stem shaft section is available on a threaded headset arrangement also referred to as quill type steering system.

The coupling arrangement further comprises a fixation portion for detachably fixing the coupling arrangement on the steering tube portion. The fixation portion defines an accommodating opening for the steering tube portion.

The coupling arrangement may be supportable on different steering tube portions of different steerer types including a steerer tube section of a threadless stem type steering system and a stem shaft section of a quill stem type steering system.

Accordingly, a coupling arrangement may be provided that can be mounted on both types of headsets as used on different bike types. In this way, the coupling arrangement may be manufactured cost-efficient.

In an embodiment, the coupling arrangement is specifically designed to be supported on an ahead or threadless headset. The coupling arrangement is configured for mounting a load carrier, for example a child seat, on a steerer tube section extending upwardly from a headset of a bike. The coupling arrangement of this embodiment comprises a coupling portion for detachably coupling the load carrier to the coupling arrangement, and a fixation portion for detachably fixing the coupling arrangement on the steerer tube section. The fixation portion comprises a first clamping member and a second clamping member for receiving the steerer tube section between them and for applying a clamping force on the steerer tube section. Each of the first clamping member and the second clamping member is or comprises a force application plate configured to contact the steerer tube section with its narrow side. The narrow side of each force application plate may comprise a height in a range from 3mm to 4mm or may comprise a height of 3mm. The first clamping member and the second clamping member are configured to clamp the steerer tube section from different sides, for example from opposite sides, wherein the force application plate may be made from metal such as stainless steel.

The fixation portion may be geometrically variable to fit to the different steering tube portions. By providing the possibility to geometrically vary the fixation portion to different steering tube portions, it is not necessary to provide different coupling arrangements for the different steering system types. It is enough to provide the fixation portion with the mentioned variability.

The fixation portion may be variable between a first supporting configuration and a second supporting configuration for adapting the fixation portion to the different steering tube portions. Each supporting configuration provides a differently sized contact surface. The contact surface may be varied in height or axial direction of the steering tube portion to be received. Thus, the height of the opening may be changed. In addition or alternatively, the contact surface may vary in circumferential direction of the opening.

In the first supporting configuration, the fixation portion may be configured to clamp against an outside of a first steering tube portion and to be clamped in axial direction of the first steering tube portion. The first steering tube portion may be the above described steerer tube section. In the second supporting configuration, the fixation portion may be configured to radially clamp against a second steering tube portion, for example the above-described stem shaft section that may be inserted in the first steering tube portion and without being clamped in axial direction of the steering tube portion.

The clamping area of the fixation portion in axial direction of the steering tube portion may in the second supporting configuration be larger than in the first supporting configuration. Again, the steering tube portion may be a steerer tube section or a stem shaft section. In an exemplary configuration, the clamping area of the fixation portion may in the first supporting configuration comprise a first height of 6 mm or less, for example 4 mm or less. In another exemplary configuration, the fixation portion may in the first supporting configuration comprise a first height of 3 mm. In another configuration, the fixation portion may in the first supporting configuration comprise a first height that is equal to or larger than 3 mm but smaller than 4 mm. In the second supporting configuration, the clamping area of the fixation portion may comprise a second height of 22 mm or less, for example 20 mm or less, or 19 mm. In another configuration, the fixation portion may in the second supporting configuration comprise a second height that is equal to or larger than 19mm but smaller than 22mm.

The fixation portion may comprise a first clamping portion and a second clamping portion. The first clamping portion and the second clamping portion may define the accommodating opening between them or at least partially limit the accommodating opening. The first clamping portion may comprise a first clamping member. The second clamping portion may comprise a second clamping member. Each clamping member may comprise a contact portion configured to contact the steerer tube section when the fixation portion is in the first supporting configuration.

For transferring the fixation portion into the second configuration, the first clamping portion may be configured to detachably receive a first adapter portion and/or the second clamping portion may be configured to detachably receive a second adapter portion. The first clamping portion and the second clamping portion may comprise the same shape or size. The first clamping portion and the second clamping portion may be manufactured identically. In this way, one and the same part may be used as first clamping portion and second clamping portion rendering the manufacturing process cost-efficient. The first adapter portion and the second adapter portion may be geometrically identical parts. In other words, also the first adapter portion and the second adapter portion may be manufactured identically. Again, using one and the same geometry for the adapter portions further reduces the manufacturing costs. Each adapter portion may be configured to enlarge or extend the contact portion of the clamping member, for example in height direction. In addition or alternatively, each adapter portion may be configured to provide a contact portion of different size and/or geometry on the clamping member.

The first clamping portion and the first adapter portion may be configured such that the contact portion of the first clamping member is covered by the first adapter portion when the first adapter portion is received on the first clamping member. The second clamping portion and the second adapter portion may be configured such that the contact portion of the second clamping member is covered by the second adapter portion when the second adapter portion is received on the second clamping member. The first adapter portion may be insertable on the first clamping member and may comprise an accommodating recess for receiving the contact portion. The second adapter portion may be insertable on the second clamping member and may comprise an accommodating recess for receiving the contact portion. The first adapter portion and the second adapter portion may be identical parts and may be configured to fit on either of the first clamping member and the second clamping member.

At least one of the first clamping member and the second clamping member is a plate-like member or force application plate. For example, the first clamping member and/or the second clamping member may comprise or may be formed by a metal plate such as a stainless steel metal plate, for example a thin metal plate comprising a thickness of 3 mm. The first clamping member or the second clamping member may be or may comprise the force application plate. The force application plate may be configured to contact the steerer tube section with its narrow side. The narrow side of the force application plate may comprise a height of 3mm. The first clamping member and the second clamping member may be configured to clamp the steerer tube section from different sides, for example from opposite sides.

The contact portion of the first clamping member and/or of the second clamping member may comprise or may be defined by a recess for partially receiving and/or partially enclosing the steerer tube section. The recess may be configured to accommodate steerer tube sections of different diameters. The recess may be configured to provide two separate contact areas with the steerer tube section that are separated by a contactless area. For example, the steerer tube section may comprise a round shape and the recess may comprise a non-round shape. The recess may comprise a non-round and partially curved shape. The recess may at least partially define straight sections in som e configurations. In some configurations, the recess may be V-shaped. The recess may be provided in a narrow surface of the first clamping member or the second clamping member.

The first clamping member may be configured movable towards and away from the second clamping member for changing the dimension of the accommodating opening and for applying a clamping force on an inserted steering tube portion. The first clamping member may be movable between a first portion in which the first clamping member is positioned further away from the second clamping portion, and a second position in which the first clamping member is positioned closer to the second clamping member. The first clamping member may be linearly movable relative to the second clamping member. The coupling arrangement may comprise a guiding arrangement for guiding the first clamping member along a movement path. The movement path may be a straight movement path.

The first clamping portion may be U-shaped with a base portion and two leg portions. The leg portions may extend from opposite end portions or opposite ends of the base portion. The first clamping member may be received between the leg portions. The first clamping member may comprise a rear end portion. The rear end portion may be received in the base portion and/or supported on the base portion. The force application member may be provided in the base portion. The force application member may be a force application bracket. The rear end portion of the first clamping member may be supported on the force application member. The first clamping member may comprise lateral side portions. The lateral side portions may be supported in the leg portions of the first clamping portion. The force application member may be configured to be force transmittingly coupled to the second clamping portion by means of the force transfer configuration. The force transfer configuration may comprise a force transfer member such as a screw. The first clamping portion may be linearly guided on the second clamping portion. Each leg portion may be supported on the second clamping portion.

In some configurations, the fixation portion may be separable. For example, the fixation portion may be separable such that the first clamping portion and the second clamping portion may be separated from each other for inserting the steering tube portion. Accordingly, for mounting the coupling arrangement, the user does not need to remove or detach any parts from the bike such as the threadless stem and/or the handlebar. A separable fixation portion is therefore beneficial over prior art coupling arrangements for the aheadset configuration that are axially inserted from above on the steering tube portion which requires a user to detach the ahead stem from the steering tube portion.

In some configurations, the fixation portion is configured such that the coupling arrangement is mountable on the different steering tube portions from radially outside of the steering tube portions independent of the steerer type so that no components of the bike, for example a stem, has to be temporarily removed for mounting the coupling arrangement.

Further disclosed is a method for mounting a coupling arrangement on a steerer tube section supported in a threadless headset of a bike. The coupling arrangement may be configured as described before. The method comprises the steps untightening a top cap and a clamping portion of a threadless stem for releasing the threadless stem, axially moving the threadless stem and optionally a spacer ring along the steerer tube section in upward direction, in particular without detaching the threadless stem from the steerer tube section, to provide a sufficiently large accommodating space for clamping members of the coupling arrangement on the steerer tube section, for example adjacent at least one spacer ring arranged between the threadless stem and a headset of the bike, arranging the clamping members in the accommodating space, and clamping the clamping members on the steerer tube section.

The clamping members may be arranged in the accommodating space by coupling a first clamping portion to a second clamping portion thereby enclosing the steering tube portion. In addition or alternatively, the clamping members may be clamped in axial direction of the steering tube portion and clamp against the steering tube portion in a direction perpendicular to the axial direction.

Further disclosed is a coupling arrangement for mounting a load carrier, for example a child seat, on a steerer tube section of a threadless stem type steering system. The coupling arrangement comprises a coupling portion for detachably coupling the load carrier to the coupling arrangement, for example a coupling portion comprising the features of coupling portions described in other portions of this description. The coupling arrangement further comprises a fixation portion for detachably fixing the coupling arrangement on the steerer tube section. The fixation portion comprises a first clamping member and a second clamping member for receiving the steerer tube section between them and for applying a clamping force on the steerer tube section. Each of the first clamping member and the second clamping member is or comprises a force application plate configured to contact the steerer tube section with its narrow side. The narrow side of each force application plate may comprise a height of 3mm. The first clamping member and the second clamping member are configured to clamp the steerer tube section from different sides, for example from opposite sides. The force application plate may be made from metal such as stainless steel.

Also disclosed is a method for mounting a coupling arrangement on a steering tube portion extending upwardly from a headset of a bike. The coupling arrangement may comprise the above-described configuration of coupling arrangements. As a first step, the method comprises the step of determining whether the steering tube portion on which the coupling arrangement is to be mounted is a steerer tube section of a threadless stem type steering system, or a stem shaft section of a quill stem type steering system. If it is determined that the steering tube portion is a steerer tube section, the fixation portion is transferred into the first supporting configuration by removing the adapter portions from the clamping members if it is determined that the fixation portion is in the second supporting configuration. Once the fixation portion is in the first supporting configuration and the contact portions of the clamping members are exposed the steps of the above-described method for mounting a coupling arrangement on a steerer tube section in a threadless headset of a bike may be performed. If it is determined that the steering tube portion is a stem shaft section, the fixation portion is transferred into the second supporting configuration by inserting the adapter portions on the clamping members if it is determined that the fixation portion is in the first supporting configuration. After that, the adapter portions are clamped against the stem shaft section.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view on a coupling arrangement according to an embodiment, wherein the coupling arrangement is in a second supporting configuration.
Fig. 2 shows a perspective view on the coupling arrangement of Fig. 1, wherein the coupling arrangement is in a first supporting configuration.
Fig. 3 shows an exploded view of the coupling arrangement.
Fig. 4 shows an exploded view of the coupling arrangement in the second supporting configuration together with a stem shaft section.
Fig. 5 shows a perspective view of the coupling arrangement in the second supporting configuration mounted on a stem shaft section.
Fig. 6 shows an exploded view of the coupling arrangement in the first supporting configuration together with a steerer tube section.
Fig. 7 shows a perspective view of the coupling arrangement in the first supporting configuration mounted on the steerer tube section.
Fig. 8 shows a view from above on components of the coupling arrangement in the second supporting configuration and mounted on the stem shaft section.
Fig. 9 shows a view from above on components of the coupling arrangement in the first supporting configuration and mounted on the steerer tube section.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free).

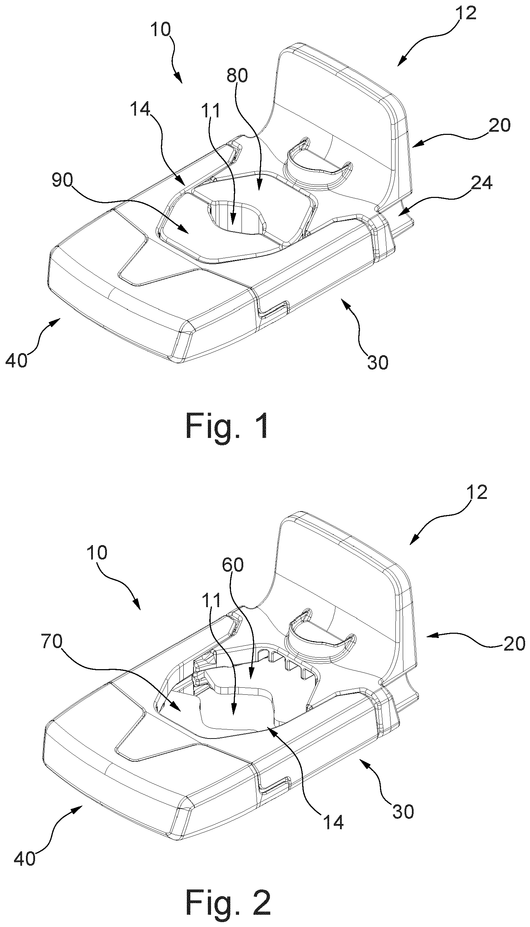

Figs. 1, 2 and 3 show exemplary configurations of a coupling arrangement 10 according to an embodiment. The coupling arrangement 10 comprises a coupling portion 12 and a fixation portion 14.

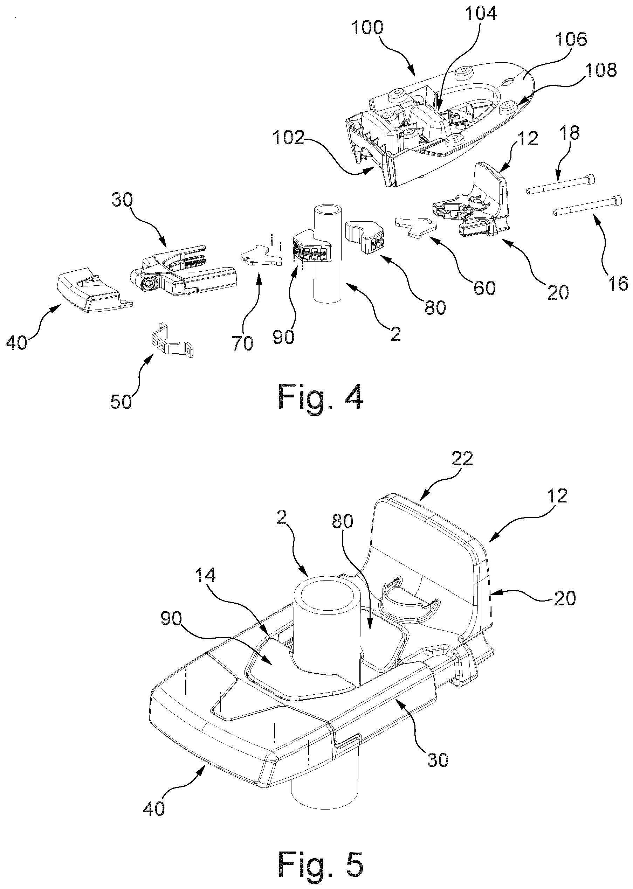

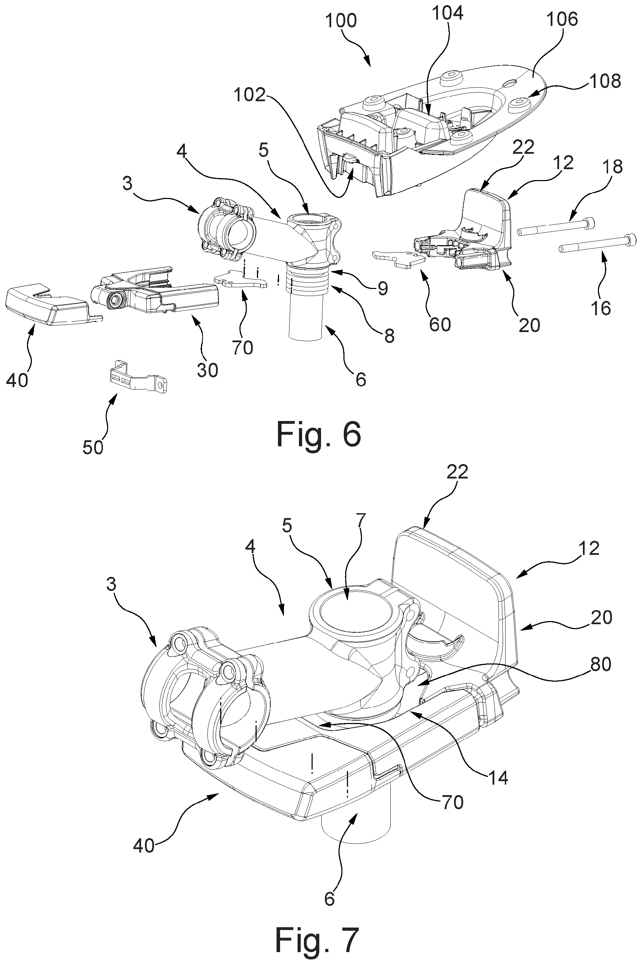

The coupling portion 12 is configured for detachably coupling a load carrier 100 to the coupling arrangement. The load carrier may be a child seat. An exemplary lower portion of the child seat is shown in Figs. 4 and 6. The lower portion of the child seat 100 comprises a supporting structure 106. The supporting structure 106 comprises openings for fixing the supporting structure 106 to a seating structure (not shown). The supporting structure 106 comprises a coupling section 102 configured to be coupled to the coupling portion 12. In the example configuration, the coupling portion 12 is embodied as a connecting protrusion 22 and the coupling section 102 comprises a receiving portion for receiving the protrusion.

The fixation portion 14 comprises a fixation opening 11. The fixation opening 11 is configured to accommodate a steering tube portion 2, 6. The steering tube portion 2, 6 may be a stem shaft section 2 of a quill stem type steering system. An exemplary stem shaft section 2 is shown in Figs. 4 and 5. The steering tube portion 2, 6 may alternatively be a steerer tube section 6 of a threadless stem type steering system. An exemplary steerer tube section 6 is shown in Figs. 6 and 7.

The fixation portion 14 comprises a first clamping portion 30 and a second clamping portion 20. The first clamping portion 30 may be a front portion of the coupling arrangement 10 and the second clamping portion 20 may be a rear portion of the coupling arrangement. The above described connecting protrusion 22 may be provided on the second clamping portion 20. As shown in drawings, the connecting protrusion 22 may be integrally formed with the second clamping portion 20.

The first clamping portion 30 may comprise a base portion 31 and two leg portions 34, 35. The leg portions 34, 35 may extend from opposite end portions of the base portion 31 and from the same side of the base portion 31. On an opposite side of the base portion 31, an attachment portion 32 for fixing an accessory, such as a wind shield, may be provided.

The base portion 31 may be configured to be partially covered by a covering 40. The covering may be configured to be inserted on the base portion 31 in a manner such that the attachment portion 32 is covered. The covering 40 may be configured to receive the attachment portion 32 and a front portion of the base portion 31. The covering 40 may comprise an accommodating recess 42 for receiving the attachment portion 32 and the front portion of the base portion 31. The covering 40 may be detachably mountable in a tool-free manner. A user may detach the covering 40 for exposing the attachment portion 32 and may fix an accessory, such as a wind screen, to the attachment portion 32.

The first clamping portion 30 comprises a receiving section 36 for accommodating a first clamping member 70 therein. The receiving section 36 may be limited or defined by the leg portions 34, 35 and the base portion 31. The base portion 31 and the leg portions 34, 35 may define a U-shape. Each free end portion of the leg portions 34, 35 may comprise a receiving opening for receiving a force transfer member of a force transfer configuration, for example a screw 16, 18. The leg portions 34, 35 may be configured to be supported on the second clamping portion 20. The leg portions 34, 35 may be slidably supported on the second clamping portion 20.

The receiving section 36 may comprise an accommodating recess 38 for receiving the first clamping member 70 therein. The accommodating recess 38 may run from one end portion of one leg portion to the end portion of the other leg portion. The accommodating recess may be provided on an inner side portion of the leg portions. The accommodating recess may be configured such that the first clamping member may be inserted into the receiving section 36 by sliding the same into the space between the leg portions 34, 35. The base portion 31 and the leg portions 34, 35 may be integrally formed as a one piece structure. The base portion 31 and the leg portions 34, 35 may be made from resin. In some configurations, the attachment portion 32 may also be part of the one piece structure and may be formed integral with the base portion 31 and the leg portions 34, 35.

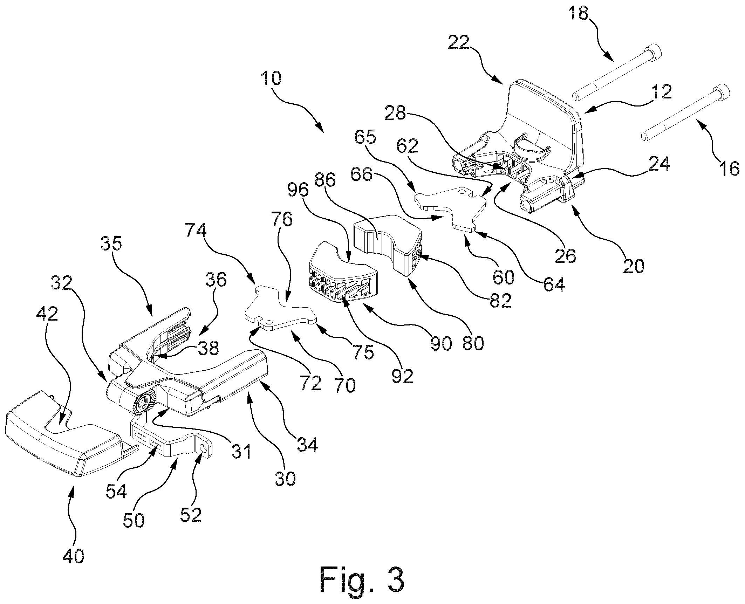

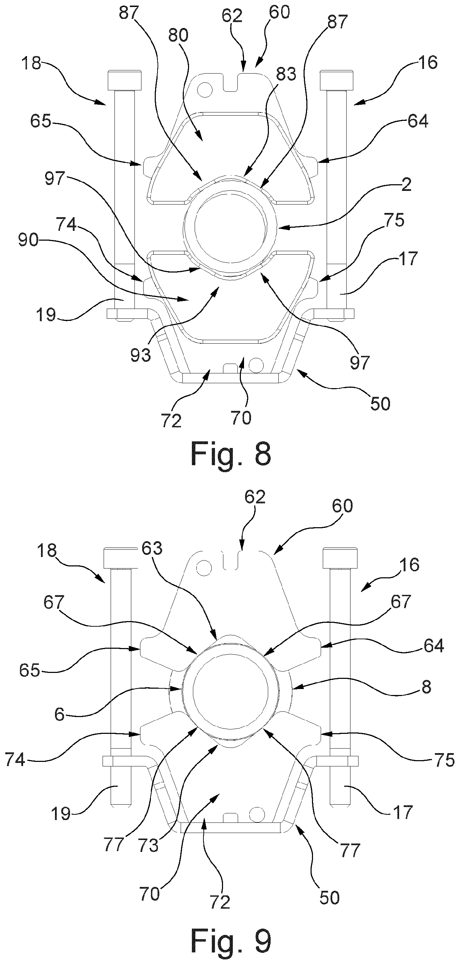

The first clamping portion 30 may comprise a force application member 50 as best seen in Fig. 3. The force application member 50 may be accommodated in a recess formed in the first clamping portion 30, for example in the base portion 31. The force application member 50 may be a bracket couplable to the force transfer member of the force transfer configuration. The force application member 50 may comprise free end portions with openings 52 for receiving the force transfer member, for example the screws 16, 18. The force application member 50 may be in threaded engagement with the force transfer members 16, 18, for example with threaded sections 17, 19 of the force transfer members 16, 18 as best seen in Fig. 9. Accordingly, rotating the force transfer members leads to a linear movement of the force application member 50 and of the first clamping portion 30 in which it is fixedly received along the longitudinal axes of the force transfer members. The force application member 50 may comprise a U-shape. In a middle section of the force application member 50, an opening 54 may be provided for partially receiving a rear end portion 72 of the first clamping member 70.

The first clamping member 70 may be a plate or force application plate, for example a metal plate that can be made from stainless steel. The plate may comprise a thickness of 3 mm. The plate may be configured to contact the steerer tube section at its narrow side. The narrow side of the force application plate may comprise a height of 3mm. The first clamping member 70 may be made from cutting a metal plate. The first clamping member 70 may comprise the above-mentioned rear end portion 72. The first clamping member 70 may comprise lateral side portions 74, 75. Each lateral side portion may be configured to be supported in the leg portions 34, 35. The rear end portion 72 of the first clamping member 70 may be supported on the force application member 50. The first clamping member 70 may be configured such that a force is applied on the rear end portion 72 by or via the force application member 50.

The first clamping member 70 comprises a contact portion 76. The contact portion 76 is configured to contact the steerer tube section 6. The contact portion 76 may comprise a recess 73 for partially receiving the steerer tube section 6. The recess 73 may be configured to accommodate steerer tube sections 6 of different diameters. The recess 73 may be configured to provide two separate contact areas 77 with the steerer tube section 6 that are separated by a contactless area as best seen in Fig. 9. For example, the steerer tube section 6 may comprise a round shape and the recess may comprise a non-round shape. In some configurations, the recess may be V-shaped. The recess may be provided in a narrow surface of the first clamping member 70.

The second clamping portion 22 may comprise the coupling portion 12. In the embodiments, the coupling portion is embodied as a connecting protrusion 22. The second clamping portion may further comprise a receiving section 26 for accommodating a second clamping member 60 therein. The receiving section 26 may be limited or defined by leg portions and a base portion. The base portion and the leg portions may define a U-shape. Each leg portion may comprise a through hole for receiving the force transfer member 16, 18. The second clamping portion 20 may comprise insertion openings 24 on a rear side for inserting the force transfer members 16, 18. The leg portions may be configured to slidably support the leg portions 34, 35 of the first clamping portion 30. The receiving section 26 may comprise an accommodating recess 28 for receiving the second clamping member 60 therein. The receiving section 26 may be configured similar to the receiving section 36 for receiving the first clamping member 70. The receiving section comprises an accommodating recess 28 for receiving the second clamping member 60 therein. The accommodating recess 28 may run from one end portion of one leg portion to the end portion of the other leg portion. The accommodating recess 28 may be provided on an inner side portion of the leg portions. The accommodating recess 28 may be configured such that the second clamping member 60 may be inserted into the receiving section 26 by sliding the same into the space between the leg portions. The base portion and the leg portions may be integrally formed as a one piece structure.

The first clamping member 70 and the second clamping member 60 may be formed identically. The second clamping member 60 may be a plate or force application plate, for example a metal plate that can be made from stainless steel. The plate may comprise a thickness of 3 mm. The plate may be configured to contact the steerer tube section 6 at its narrow side. The narrow side of the force application plate may comprise a height of 3mm. The second clamping member 60 may be made from cutting a metal plate. The second clamping member 60 may comprise a rear end portion 62. The second clamping member 60 may comprise lateral side portions 64, 65. Each lateral side portion may be configured to be supported in the leg portions. The rear end portion 62 of the second clamping member 60 may be supported on the base portion. The second clamping member 60 may be configured such that a force is applied on the rear end portion 62 by or via the base portion. For reinforcing purposes, the base portion may comprise a reinforcing structure such as a bracket.

The second clamping member 60 comprises a contact portion 66. The contact portion 66 is configured for a contact with the steerer tube section 6. The contact portion 66 may comprise a recess 63 for partially receiving the steerer tube section 6. The recess 63 may be configured to accommodate steerer tube sections 6 of different diameters. The recess 63 may be configured to provide two separate contact areas 67 with the steerer tube section 6 that are separated by a contactless area as best seen in Fig. 9. For example, the steerer tube section 6 may comprise a round shape and the recess may comprise a non-round shape. In some configurations, the recess may be V-shaped. The recess may be provided in a narrow surface of the second clamping member 60. The second clamping member 60 and the first clamping member 70 are arranged such that their recesses 63, 73 are oriented towards each other. As shown in Fig. 9, four separate contact areas 67, 77 for contacting the steerer tube section may be provided.

The first clamping member 70 is movable towards and away from the second clamping member 60 by operation of the screws 16, 18 which are rotatably supported on the second clamping member 60 and threadedly engaged with the first clamping portion 30. The first clamping member and the second clamping member may be configured to clamp the steerer tube section from different sides, for example from opposite sides.

The first clamping portion 30 is fully detachable from the second clamping portion 20, for example by disengaging the screws 16, 18 from the bracket 50 and pulling the first clamping portion 30 off the second clamping portion 20. In this way, the coupling arrangement 10 may be mounted on the steering tube portions 2, 6 without having to insert the coupling arrangement 10 on the steering tube portions 2, 6 in axial direction of the steering tube portions 2, 6. The first clamping portion 30 and the second clamping portion 20 can be radially approached on the steering tube portions 2, 6 from opposite sides thereby enclosing the steering tube portions 2, 6 and may then be coupled to each other using the force transfer members 16, 18.

With the above-described configuration (see Figs. 2, 6, 7 and 9), the coupling arrangement is supportable on a steerer tube section 6 of a threadless stem type steering system. The first clamping member 70 and the second clamping member 60 may be configured for a direct contact with the steerer tube section 6 via the contact portions 66, 76. The contact portions 66, 76 may be inserted in an accommodating space 9 between a threadless stem 4 and a headset (not shown) of a bike. In the threadless stem type steering system, the threadless stem 4 is coupled to an upper end portion of the steerer tube section 6 via a clamping portion 5 of said threadless stem 4. The threadless stem further comprises a fixation portion 3 for fixing a handlebar (not shown) on the threadless stem 4. The threadless stem 4 is fixed on the bike by clamping the same on the steerer tube section 6. Clamping is done by tightening the clamping portion 5 for radially clamping the steerer tube section 6 and by axially clamping the clamping portion onto the headset by applying a tightening force on the clamping portion 5 via a top cap 7 for urging the clamping portion 5 towards the headset and clamp it against the headset. One or more spacer rings 8 may be provided between the clamping portion 5 and the headset. Spacer rings 8 are for example shown in Fig. 6. A clamping force exerted by the top cap 7 in axial direction of the steerer tube section 6 is then transferred to the headset via the clamping portion 5 and one or more spacer rings 8. In other words, the spacer rings 8 are clamped between the clamping portion 5 and the spacer rings 8. The above-described accommodating space 9 may be provided between spacer rings 8 (see Fig. 6). Alternatively, the accommodating space 9 may be provided between the clamping portion 5 and a spacer ring 8 or the headset. The contact portions 66, 76 may be inserted in the accommodating space 9. Tightening the top cap 7 then clamps the contact portions 66, 76 between the clamping portion 5 and the headset in axial direction of the steerer tube section 6, for example between two adjacent spacer rings 8 (see Fig. 6). In this way, the coupling arrangement 10 may be axially arrested on the steerer tube section 6. Tightening the clamping members 60, 70 radially clamps the clamping members 60, 70 on the steerer tube section 6. The coupling arrangement 10 may thus be mounted on the steerer tube section 6 by a double clamping. If the clamping members 60, 70 are made of a thin metal plate, for example with a thickness of 3 mm, the accommodating space 9 may be provided by simply untightening the top cap 7 and the clamping portion 5 and moving the clamping portion 5 and optionally one or more spacer rings 8 in upward direction. The contact portions 66, 76 may then be placed in the accommodating space 9 and clamped therein by tightening the top cap 7. The fixation portion 14 may be separable. In this case, the threadless stem 4 does in some configurations not have to be removed from the steerer tube section 6 for mounting the coupling arrangement 10.

A method for mounting a coupling arrangement on a steerer tube section 6 supported in a threadless headset of a bike may comprise as a first step an untightening of the top cap 7 and the clamping portion 5 of the threadless stem 4 for releasing the threadless stem 4 and to render it shiftable along the steerer tube section 6. This can be done by untightening a cap bolt (not shown) in said top cap 7 and by untightening bolts in the clamping portion 5 of the threadless stem 4. After that, the threadless stem 4 and optionally also a spacer ring 8 can be axially moved along the steerer tube section 6 in upward direction, in particular without detaching the threadless stem 4 from the steerer tube section 6, to provide a sufficiently large accommodating space 9 for clamping members 60, 70 on the steerer tube section 6, for example a space of 3 mm height. After that, the clamping members 60, 70 are arranged in the accommodating space 9 and clamped on the steerer tube section 6. The clamping members 60, 70 may be arranged in the accommodating space 9 by coupling a first clamping portion 30 to a second clamping portion 20 thereby enclosing the steerer tube section 6. The clamping members 60, 70 may then be clamped in axial direction of the steerer tube section 6 and clamp against the steerer tube section 6 in a direction perpendicular to the axial direction.

The coupling arrangement 10 may be configured supportable on different steering tube portions of different steerer types including the steerer tube section 6 of the threadless stem type steering system (see Figs. 6, 7 and 9) and a stem shaft section 2 of a quill stem type steering system (see Figs. 4, 5 and 8). The fixation portion 14 may be variable between a first supporting configuration and a second supporting configuration for adapting the fixation portion 14 to the different steering tube portions. In Fig. 1, the coupling arrangement is shown in the second configuration. In Fig. 2, the coupling arrangement is shown in the first configuration. Each supporting configuration may provide a differently sized contact surface. In the first supporting configuration, the coupling arrangement is configured to be supported on the steerer tube section 6 and in the second configuration, the coupling arrangement is configured to be supported on the stem shaft section 2.

For transferring the fixation portion 14 into the second configuration the first clamping portion 30 may be configured to detachably receive a first adapter portion 90 and the second clamping portion 20 may be configured to detachably receive a second adapter portion 80. Each adapter portion 80, 90 may be configured to enlarge or extend the contact portion 66, 76 of the clamping members 60, 70 in height direction and/or to provide a contact portion 66, 76 of different size and/or geometry on the clamping member 60, 70.

Each adapter portion 80, 90 may be insertable in the clamping portions 20, 30, for example on a clamping member 60, 70. Each adapter portion 80, 90 may comprise an accommodating recess 82, 92 for receiving a contact portion 66, 76. Accordingly, when the adapter portions 80, 90 are mounted on the clamping portions 20, 30, the contact portions 66, 76 of the clamping members 60, 70 are covered as best seen in Figs. 1 and 8. When the adapter portion 80, 90 are detached from the clamping members 60, 70, the contact portions 66, 76 are exposed and available for clamping on the steerer tube section 6. Each adapter portion 80, 90 may be an adapter block, for example made from plastics. Each adapter portion 80, 90 comprises a contact portion 86, 96 configured to contact the stem shaft section 2. Each contact portion 86, 96 comprises a recess 83, 93 for partially receiving the stem shaft section 2. Each contact section may be configured to provide two separate contact areas 87, 97 with the stem shaft section 2 that may be separated from each other by a contactless area between them. Each recess 83, 93 may be comprise a non-round shape. In some configurations, each recess 83, 93 may be V-shaped. The adapter portions 80, 90 are mountable on the clamping members 60, 70 such that their recesses 83, 93 are oriented towards each other. In the shown embodiment, the adapter portions 80, 90 have a height of 19 mm.

With the above coupling arrangement comprising the adapter portions, a method of mounting the coupling arrangement may comprise the step of determining whether the steering tube portion 2, 6 on which the coupling arrangement 10 is to be mounted is a steerer tube section 6 of a threadless stem type steering system or a stem shaft section 2 of a quill stem type steering system. If the steering tube portion is a steerer tube section 6, the fixation portion 14 is transferred into the first supporting configuration by removing the adapter portions 80, 90 from the clamping members 60, 70 should the fixation portion be in the second supporting configuration. As soon as the coupling arrangement is in the first supporting configuration, it can be mounted on the steerer tube section 6 in the manner already described before. If the steering tube portion is a stem shaft section 2, the fixation portion 14 is transferred into the second supporting configuration by inserting the adapter portions on the clamping members should the fixation portion be in the first supporting configuration. After having attached the adapter portions, the adapter portions 80, 90 may be clamped against the stem shaft section 2.

In one configuration, the coupling arrangement 10 comprises a coupling portion 12 for detachably coupling said load carrier 100 to the coupling arrangement 10, and a fixation portion 14 for detachably fixing the coupling arrangement 10 on the steerer tube section 6, wherein the fixation portion 14 comprises a first clamping member 70 and a second clamping member 60 for receiving the steerer tube section 6 between them and for applying a clamping force on the steerer tube section 6, wherein each of the first clamping member 70 and the second clamping member 60 is or comprises a force application plate configured to contact the steerer tube section 6 with its narrow side, wherein the narrow side of each force application plate may comprise a height of 3mm, wherein the first clamping member 70 and the second clamping member 60 are configured to clamp the steerer tube section 6 from different sides, for example from opposite sides, wherein the force application plate may be made from metal such as stainless steel.

It is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing description will provide those skilled in the art with a convenient roadmap for implementing an exemplary embodiment, it being understood that various changes may be made in the function and arrangement of elements described in an exemplary embodiment without departing from the scope as set forth in the appended claims.

## Claims

1. Coupling arrangement (10) for mounting a load carrier (100), for example a child seat (100), on a steering tube portion (2, 6) extending upwardly from a headset of a bike, for example a steerer tube section (6) or a stem shaft section (2), said coupling arrangement (10) comprising
a coupling portion (12) for detachably coupling said load carrier (100) to said coupling arrangement (10), and
a fixation portion (14) for detachably fixing said coupling arrangement (10) on said steering tube portion (2, 6), said fixation portion (14) defining an accommodating opening (11) for said steering tube portion (2, 6),
wherein said coupling arrangement (10) is supportable on different steering tube portions of different steerer types including a steerer tube section (6) of a threadless stem type steering system and a stem shaft section (2) of a quill stem type steering system.

2. Coupling arrangement (10) for mounting a load carrier (100), for example a child seat (100), on a steerer tube section (6) extending upwardly from a headset of a bike, said coupling arrangement (10) comprising
a coupling portion (12) for detachably coupling said load carrier (100) to said coupling arrangement (10), and
a fixation portion (14) for detachably fixing said coupling arrangement (10) on said steerer tube section (6),
wherein said fixation portion (14) comprises a first clamping member (70) and a second clamping member (60) for receiving said steerer tube section (6) between them and for applying a clamping force on the steerer tube section (6),
wherein each of said first clamping member (70) and said second clamping member (60) is or comprises a force application plate configured to contact said steerer tube section (6) with its narrow side, wherein said narrow side of each force application plate may comprise a height in a range from 3mm to 4mm or may comprise a height of 3mm, wherein said first clamping member (70) and said second clamping member (60) are configured to clamp said steerer tube section (6) from different sides, for example from opposite sides, wherein said force application plate may be made from metal such as stainless steel.

3. Coupling arrangement (10) according to claim 1 or claim 2,
wherein said fixation portion (14) is geometrically variable to different steering tube portions (2, 6), and/or
wherein said fixation portion (14) is variable between a first supporting configuration and a second supporting configuration each providing a differently sized contact surface, for adapting said fixation portion (14) to different steering tube portions (2, 6).

4. Coupling arrangement (10) according to claim 3,
wherein in said first supporting configuration, said fixation portion (14) is configured to clamp against an outside of a first tube portion (6), for example a steerer tube section (6), and to be clamped in axial direction of said first tube portion (6), and
wherein in said second supporting configuration, said fixation portion (14) is configured to radially clamp against a second tube portion (2), for example a stem shaft section (2) inserted in said first tube portion (6), without being clamped in axial direction of said second tube portion (2).

5. Coupling arrangement (10) according to claim 3 or claim 4,
wherein a clamping area of said fixation portion (14) in axial direction of said steering tube portion (2, 6), for example said steerer tube section (6) or stem shaft section (2), is larger in said second supporting configuration than in said first supporting configuration, wherein in said first supporting configuration said clamping area of said fixation portion (14) may comprise a first height of 6 mm or less, in particular 4 mm or less, for example 3 mm, or a first height that is equal to or larger than 3 mm but smaller than 4 mm, and/or wherein in said second configuration said clamping area of said fixation portion (14) may comprise a second height of 22 mm or less, in particular 20 mm or less, for example 19 mm, or a second height that is equal to or larger than 19mm but smaller than 22mm.

6. Coupling arrangement (10) according to one of claims 3 to 5,
wherein said fixation portion (14) comprises a first clamping portion (30) and a second clamping portion (20), said first clamping portion (30) and said second clamping portion (20) defining said accommodating opening (11) between them,
wherein said first clamping portion (30) comprises a first clamping member (70) and/or said second clamping portion (20) comprises a second clamping member (60), wherein each clamping member (70, 60) comprises a contact portion (66, 76) configured to contact said steerer tube section (6) when said fixation portion (14) is in said first supporting configuration.

7. Coupling arrangement (10) according to claim 6,
wherein for transferring said fixation portion (14) into said second configuration said first clamping portion (30) is configured to detachably receive a first adapter portion (90) and/or said second clamping portion (20) is configured to detachably receive a second adapter portion (80),
wherein each adapter portion (80, 90) may be configured to enlarge or extend said contact portion (66, 76) of said clamping member (60, 70) in height direction and/or to provide a contact portion (66, 76) of different size and/or geometry on said clamping member (60, 70).

8. Coupling arrangement (10) according to claim 7,
wherein said first clamping portion (30) and/or said second clamping portion (20) is/are configured such that said contact portion (66, 76) of its/their clamping member(s) (60, 70) is/are covered by the respectively received adapter portion (80, 90),
wherein said adapter portion (80, 90) may be insertable on said clamping member (60, 70) and may comprise an accommodating recess (82, 92) for receiving said contact portion (66, 76).

9. Coupling arrangement (10) according to one of claims 6 to 8,
wherein at least one of said clamping members (60, 70) is a plate-like member, for example a metal plate, and/or
wherein said contact portion (66, 76) may comprise or may be defined by a recess (63, 73) for partially receiving and/or partially enclosing said steerer tube section (6), wherein said recess (63, 73) may be configured to accommodate steerer tube sections (6) of different diameters, and/or wherein said recess (63, 73) may be configured to provide two separate contact areas (67, 77) with said steerer tube section (6) that are separated by a contactless area, and/or wherein said recess (63, 73) may comprise a non-round shape, and/or wherein said recess (63, 73) may be V-shaped.

10. Coupling arrangement (10) according to one of claims 6 to 9,
wherein said first clamping member (70) is configured movable towards and away from said second clamping member (60) for changing the dimension of said accommodating opening (11) and for applying a clamping force on an inserted steering tube portion (2, 6), in particular between a first position in which said first clamping member (70) is positioned further away from said second clamping portion (60) and a second position in which said first clamping member (70) is positioned closer to the second clamping member (60),
wherein said first clamping member (70) may be linearly movable relative to said second clamping member (60),
wherein said coupling arrangement (10) may comprise a guiding arrangement for guiding said first clamping member (70) along a movement path, for example along a straight movement path.

11. Coupling arrangement (10) according to one of claims 6 to 10,
wherein said fixation portion (14) is separable, in particular such that said first clamping portion (30) and said second clamping portion (20) are separable from each other for inserting said steering tube portion (2, 6), and/or
wherein said first clamping portion (30) may be U-shaped with a base portion (31) and two leg portions (34, 35) extending from opposite end portions of said base section (31),
wherein said first clamping member (70) is received between said leg portions (34, 35),
wherein a rear end portion (72) of said first clamping member (70) may be received in said base portion (31),
wherein a force application member (50), for example a force application bracket, may be provided in said base portion (31) and wherein said rear end portion (72) of said first clamping member (70) may be supported on said force application member (50), for example in an opening or slot (54),
wherein lateral side portions (74, 75) of said first clamping member (70) may be supported in said leg portions (34, 35) of said first clamping portion (30),
wherein said force application member (50) is force transmittingly couplable to said second clamping portion (20) by means of a force transfer configuration, wherein said force transfer configuration may comprise a screw (16, 18),
wherein said first clamping portion (30) is linearly guided on said second clamping portion (20), wherein each leg portion (34, 35) may be supported on said second clamping portion (20).

12. Coupling arrangement (10) according to one of the preceding claims,
wherein said fixation portion (14) is configured such that said coupling arrangement (10) is mountable on said different steering tube portions (2, 6) from radially outside of said steering tube portions (2, 6) independent of said steerer type so that no components of a bike, for example a stem (4), has to be temporarily removed for mounting said coupling arrangement (10).

13. Method for mounting a coupling arrangement (10), for example the coupling arrangement according to one of the preceding claims, on a steerer tube section (6) supported in a threadless headset of a bike,
said method comprising the steps
untightening a top cap (7) and a clamping portion (5) of a threadless stem (4) for releasing said threadless stem (4), for example by untightening a cap bolt in said top cap (7) and untightening bolts in said clamping portion (5) of said threadless stem,
axially moving said threadless stem (4) and optionally a spacer ring (8) along said steerer tube section (6) in upward direction, in particular without detaching said threadless stem (4) from said steerer tube section (6), to provide a sufficiently large accommodating space (9) for clamping members (60, 70) of said coupling arrangement (10) on said steerer tube section (6), for example adjacent at least one spacer ring (8) arranged between said threadless stem (4) and a headset of said bike,
arranging said clamping members (60, 70) in said accommodating space, clamping said clamping members (60, 70) on said steerer tube section (6).

14. Method according to claim 13,
wherein said clamping members (60, 70) are arranged in said accommodating space by coupling a first clamping portion to a second clamping portion thereby enclosing said steering tube portion (2, 6), and/or
wherein said clamping members (60, 70) are clamped in axial direction of said steering tube portion (2, 6) and clamp against said steering tube portion (2, 6) in a direction perpendicular to said axial direction.

15. Method for mounting a coupling arrangement (10), for example the coupling arrangement according to one of claims 1 to 11, on a steering tube portion (2, 6) extending upwardly from a headset of a bike, in particular a coupling arrangement comprising a fixation portion (14) for detachably fixing said coupling arrangement (10) on said steering tube portion (2, 6), wherein said fixation portion (14) defines an accommodating opening (11) for said steering tube portion (2, 6), wherein said fixation portion (14) is variable between a first supporting configuration and a second supporting configuration each providing a differently sized contact surface, for adapting said fixation portion (14) to said different steering tube portions (2, 6), wherein said fixation portion (14) comprises a first clamping member (70) and a second clamping member (60), wherein for transferring said fixation portion (14) into said second configuration a first adapter portion (90) and a second adapter portion (80) may be attached to said first clamping member (70) and said second clamping member (60),
said method comprising the steps
determining whether said steering tube portion (2, 6) on which said coupling arrangement (10) is to be mounted is a steerer tube section (6) of a threadless stem type steering system or a stem shaft section (2) of a quill stem type steering system,
if said steering tube portion (2, 6) is a steerer tube section (6),
transferring said fixation portion (14) into said first supporting configuration by removing said adapter portions (80, 90) from said clamping members (60, 70), if it is determined that said fixation portion (14) is in said second supporting configuration, and
performing the steps as described in one of claims 13 or 14,
or
if said steering tube portion (2, 6) is a stem shaft section (2),
transferring said fixation portion (14) into said second supporting configuration by inserting said adapter portions (80, 90) on said clamping members (60, 70) if it is determined that said fixation portion (14) is in said first supporting configuration, and
clamping said adapter portions (80, 90) against said stem shaft section (2).
